# EUROPÄISCHE PATENTSCHRIFT

(11) **EP 2 895 756 B1**
(45) Veröffentlichungstag und Bekanntmachung des Hinweises auf die Patenterteilung: **13.03.2019**
(21) Anmeldenummer: 13765676.5
(22) Anmeldetag: 13.09.2013
(51) Int. Cl.: F16C 41/04, F16C 33/38, F16C 33/50

(54) **WÄLZLAGER**
ROLLING-ELEMENT BEARING
PALIER À ROULEMENT

(30) Priorität: 14.09.2012 DE 102012216364
(43) Veröffentlichungstag der Anmeldung: 22.07.2015
(73) Patentinhaber: Aktiebolaget SKF, 41 550 Göteborg (SE)
(72) Erfinder: HOFMANN, Sabine, 97072 Würzburg (DE); LIANG, Baozhu, 97456 Hambach (DE)
(74) Vertreter: Kuhstrebe, Jochen
(86) Internationale Anmeldenummer: PCT/EP2013/068978
(87) Internationale Veröffentlichungsnummer: WO 2014/041109

(56) Entgegenhaltungen:
- WO-A2-2012/076583
- WO-A2-2012/092107
- DE-A1- 10 049 578
- DE-A1-102011 004 374
- DE-U1- 8 914 085

## Beschreibung

Die Erfindung betrifft ein Wälzlager mit mindestens einem Innenring und mindestens einem Außenring, wobei zwischen den Lagerringen eine Anzahl Wälzkörper angeordnet sind, wobei die Wälzkörper durch einen Käfig gehalten werden, wobei der Käfig aus einer Anzahl Käfigsegmenten besteht, wobei jedes Käfigsegment aus einer rahmenförmigen Struktur besteht, bei der mehrere seitliche Begrenzungswände eine Aufnahmetasche für einen Wälzkörper bilden, wobei an jedem Käfigsegment mindestens ein Befestigungselement angeordnet ist, wobei die Käfigsegmente über ein Kopplungselement zumindest zeitweise verbindbar sind, wozu das Kopplungselement mit den Befestigungselementen in Eingriff gebracht wird, und wobei die Befestigungselemente zumindest teilweise, vorzugsweise vollständig, als geschlossene Ösen ausgebildet sind, durch die das Kopplungselement durchgefädelt werden kann.

Ein solches Wälzlager zeigt die WO 2012/092107 A2**.** Ähnliche und andere Lösungen gehen aus der GB 2 104 600 A**,** aus der DE 100 49 578 A1**,** aus der DE 10 2011 089 078 A1**,** aus der DE 10 2011 080 167 A1**,** aus der DE 10 2007 002 359 A1**,** aus der DE 10 2006 045 436 A1**,** aus der DE 199 37 660 A1**,** aus der DE 89 14 085 U1**,** aus der DE 42 29 136 C1**,** aus der DE 40 15 303 C2 und aus der DE 10 2011 004 374 A1 hervor.

Ein anderes Wälzlager ist aus der WO 2012/076583 A2 bekannt. Statt eines klassischen einstückigen Lagerkäfigs wird hier der Käfig durch eine Anzahl Käfigsegmente gebildet. Dies hat den Vorteil, dass eine besonders gute Eignung für große Kegelrollenlager besteht und die hier auftretenden Belastungen besonders gut aufgenommen werden können. Des Weiteren können die einzelnen Käfigsegmente gut montiert werden; gleichzeitig kann ein geringes Käfiggewicht erreicht werden. Die Ausbildung der Käfigsegmente ermöglicht eine sichere Aufnahme des Wälzkörpers und eine zuverlässige Führung des Käfigsegments am Wälzkörper. Die Käfigsegmente kommen dabei bei bestimmungsgemäßer Benutzung nicht in Berührung; sie sind nicht miteinander verbunden.

Nach dem Zusammenbau des Lagers muss dieses allerdings als Einheit gehandhabt werden, da der Lageraußenring und der Lagerinnenring nicht separiert werden können, ohne dass das Lager auseinanderfallen würde. Dies ergibt sich durch den konzeptionellen fehlenden Verbund der einzelnen Käfigsegmente untereinander. Das Lager muss also als komplette Einheit transportiert und verbaut werden. Dies ist unter gewissen Umständen nachteilig und schränkt die Vorteile der Käfigsegment-Bauweise ein.

Der Erfindung liegt die **Aufgabe** zugrunde, ein gattungsgemäßes Lager so fortzubilden, dass der genannte Nachteil eliminiert werden kann. Demgemäß soll die Handhabung des Lagers, insbesondere während dessen Montage, in einfacher Weise verbessert bzw. erleichtert werden. Ein weiterer wesentlicher Aspekt ist, dass der Käfig auch bei Erschütterungen im Betrieb stabil in seiner vorgesehenen Arbeitsposition gehalten werden soll. Demgemäß sollen insbesondere Lagerschwingungen sich nicht so störend auswirken.

Die **Lösung** dieser Aufgabe durch die Erfindung ist dadurch gekennzeichnet, dass ein Käfigsegment mit seiner Aufnahmetasche einen Wälzkörper aufnimmt und die sich an diesen Wälzkörper in Umfangsrichtung anschließenden Wälzkörper von einem Käfigsegment freigehalten sind, wobei am Käfigsegment in Umfangsrichtung herausragende Halteabschnitte angeordnet sind, die für die sich an den vom Käfigsegment gehaltenen Wälzkörper in Umfangsrichtung anschließenden Wälzkörper eine Anlauffläche bilden, die die Wälzkörper in ihrer radialen Beweglichkeit begrenzen.

Das Kopplungselement ist dabei bevorzugt ein Zugkräfte übertragendes, aber weitgehend biegeschlaffes Bauteil. Speziell ist hier an ein Seil gedacht.

Die Befestigungselemente können dabei einstückig am Käfigsegment angeformt sein.

Die seitlichen Begrenzungswände des Käfigsegments können einen geschlossenen im wesentlichen rechteckförmigen (bzw. konischen) Rahmen bilden, wobei zwei Begrenzungswände in Umfangsrichtung des Wälzlagers verlaufen, wobei zwei Begrenzungswände die in Umfangsrichtung verlaufenen Begrenzungswände verbinden und wobei an den beiden in Umfangsrichtung verlaufenen Begrenzungswänden je ein Befestigungselement angeordnet ist.

Die die in Umfangsrichtung verlaufenden Begrenzungswände verbindenden Begrenzungswände können mit konkaven Anlaufflächen versehen sein, die den sich in der Aufnahmetasche befindlichen Wälzkörper in seiner radialen Beweglichkeit begrenzen.

Bevorzugt ist vorgesehen, dass die Käfigsegmente aus einem Material bestehen, dessen Wärmeausdehnungskoeffizient einen Wert aufweist, der in einem Toleranzband von +/- 15 %, verglichen mit dem Wärmeausdehnungskoeffizienten von Stahl liegt. Als Material, das diese Eigenschaft aufweist, hat sich insbesondere Gusseisen erwiesen, das mit Vorteil eingesetzt wird.

Eine Weiterbildung sieht vor, dass an oder auf dem Kopplungselement mindestens ein Abstandselement angeordnet ist. Mit diesem kann die relative Beweglichkeit zwischen dem Kopplungselement und mindestens einem Befestigungselement in Umfangsrichtung begrenzt werden. Additiv oder alternativ dient das Abstandselement auch dazu, den Abstand zwischen zwei benachbarten Käfigsegmenten konstant zu halten. Demgemäß sind also Abstandselemente vorgesehen, die auf dem Seil aufgezogen und zwischen zwei Käfigsegmenten angeordnet sind, um die Käfigsegmente in Umfangsrichtung auf einem definierten Abstand zu halten. Die Bewegungsmöglichkeit der einzelnen Käfigsegmente relativ zueinander und in Umfangsrichtung kann so definiert bzw. eingestellt werden.

Eine weitere Fortbildung sieht vor, dass an dem Käfigsegment mindestens ein Abstützelement angeordnet ist; dieses wird bevorzugt aus dem Material des Käfigsegments selber gebildet, d. h. es ist angeformt. Dieses Abstützelement dient dazu, im Falle des Kippens des Käfigsegments eine Abstützung an einer Schulter des Lagerrings zuzulassen.

Das vorgeschlagene Wälzlager ist besonders bevorzugt ein Kegelrollenlager.

Die erfindungsgemäße Ausgestaltung bietet die Möglichkeit, das Lager für den Einbau zu zerlegen, d. h. im Falle von Kegelrollenlagern den Innenring plus Rollensatz vom Außenring zu trennen, ohne dass die Lagerkomponenten auseinanderfallen. Die Käfigsegmente sind also selbsthaltend. Die Erfindung sieht also vor, dass ein Ein-Taschen-Käfigsegment mit einer zusätzlichen Haltevorrichtung versehen wird, die zur Verbindung der einzelnen Segmente miteinander dient und es so verhindert, dass sich der Rollen-Käfig-Verbund im zusammengebauten Zustand vom Innenring lösen kann.

Bevorzugt wird lediglich jeder zweite Wälzkörper (Rolle) komplett von einem Käfigsegment umschlossen, d. h. es sind nur halb so viele Käfigsegmente wie Rollen im Lager vorhanden. Alternativ lässt sich auch jede Rolle mit einem Käfigsegment ausrüsten.

Die in den Käfigsegment-Aufhahmetaschen sitzenden Rollen werden durch die erwähnte geometrische Ausgestaltung nach dem Schnapp-Prinzip in der Tasche gehalten. In diesem Zusammenhang wird auf die oben genannte WO 2012/076583 A2 der Anmelderin ausdrücklich Bezug genommen, wo hierzu Details beschrieben werden. Die Rollen, die nicht von einem Käfigsegment umschlungen sind, werden bevorzugt durch zwei zusätzliche Auskragungen, die sich in Umfangsrichtung erstrecken, am Herausfallen, d. h. an einer freien Bewegung in radiale Richtung, gehindert.

Zur Verbindung der einzelnen Käfigsegmente miteinander sind - wie erläutert - bevorzugt an den Stirnseiten der Käfigsegmente Haltevorrichtungen angebracht, an denen beispielsweise ein Seil befestigt werden kann. Durch diese Verbindung der einzelnen Käfigsegmente wird der Rollen-Käfig-Verbund hergestellt, so dass der Rollensatz samt Käfigsegmenten gesichert gegen Auseinanderfallen auf dem Lagerinnenring sitzt.

Das Seil kann dabei nur solange eingebaut bleiben, bis die endgültige Montage des Lagers durchgeführt wird; es kann dann entfernt werden, weil es für den Betrieb des Lagers nicht benötigt wird. Es kann aber auch genauso vorgesehen werden, dass das Seil permanent montiert bleibt.

Das Seil als Kopplungselement ist bevorzugt, allerdings sind auch andere Lösungen denkbar, beispielsweise eine Schraubverbindung, die zwischen zwei benachbarten Käfigsegmenten wirksam angeordnet ist.

Damit kann in vorteilhafter Weise durch das Anbringen des Kopplungselements (Seil) an den Befestigungselementen der aus Segmenten bestehende Käfig samt Rollen mit dem Lagerinnenring unverlierbar verbunden und separat zum Außenring in die Anwendung eingebaut werden.

Da sich die Wärmeausdehnungskoeffizienten von Stahl und Kunststoff - aus dem die Käfigsegmente grundsätzlich gefertigt sein können - typischerweise unterscheiden, muss das Endspiel zwischen den Käfigsegmenten größer gestaltet werden, was sich für eine maximale Tragzahl nachteilig auswirken kann. Daher betrifft ein weiterer Aspekt der vorliegenden Erfindung die Werkstoffwahl für die Käfigsegmente. Dieser ist bevorzugt so gewählt, dass der Werkstoff des Käfigsegments einen ähnlichen Wärmeausdehnungskoeffizienten wie Stahl hat. Das gewählte Material des Käfigsegments sollte hierbei einen Wärmedehnungskoeffizienten von 10 x 10⁻⁶ bis 13 x 10⁻⁶ 1/K liegen (bei Stahl liegt er bei 11,5 x 10⁻⁶ 1/K). Wie oben ausgeführt, hat sich Gusseisen als Werkstoff für die Käfigsegmente bewährt; dieses Material erfüllt die genannte Bedingung. Dies ermöglicht es, bei der Auslegung des Rollen-Endspiels und des Schnappmaß engere Abstände zuzulassen, da die Wärmeausdehnung von Ringen und Käfigsegmenten ähnlich ist. Dies unterstützt eine sichere Handhabung des Innenrings mit montiertem Rollensatz, aber ohne Außenring. Die Verwendung eines solchen Werkstoffs, der eine dem Stahl ähnliche Wärmeausdehnung hat, ermöglicht also ein geringes Endspiel innerhalb des Rolle-Käfig-Verbunds, was sowohl für das Halten der Rollen auf dem Innenring, als auch für die Leistungsfähigkeit des Lagers von Vorteil ist.

In der Zeichnung ist ein Ausführungsbeispiel der Erfindung dargestellt. Es zeigen:
- Fig. 1: einen Teil eines Kegelrollenlagers, gesehen in Achsrichtung,
- Fig. 2: den Innenring eines Kegelrollenlagers mit dem Rollensatz und dem Käfig und
- Fig. 3: ein Käfigsegment des Käfigs eines Kegelrollenlagers, gesehen in radiale Richtung.

In den Figuren ist für die Anwendung in einem Kegelrollenlager das erfindungsgemäße Konzept illustriert.

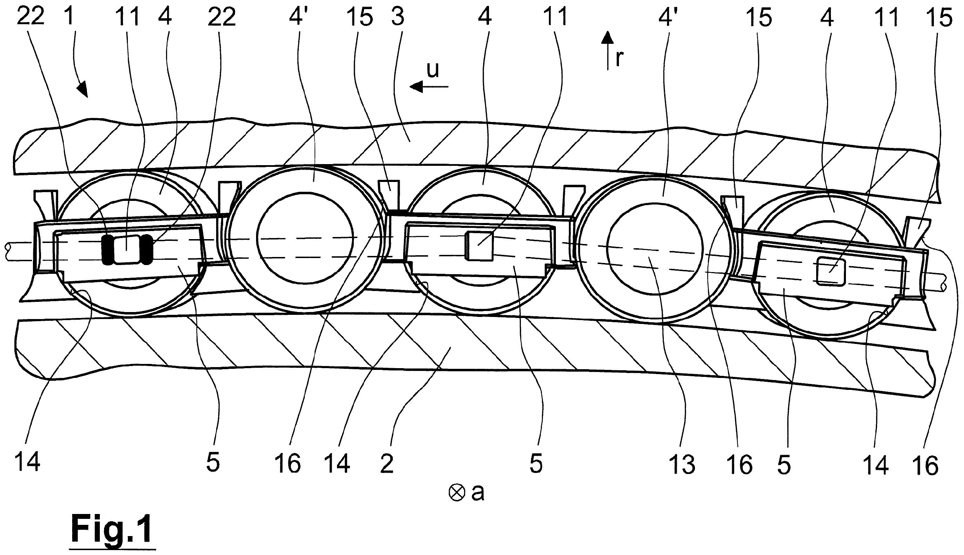

In Fig. 1 ist zu sehen, dass das Wälzlager 1 einen Innenring 2 und einen Außenring 3 umfasst, die relativ zueinander um die axiale Richtung a drehen können, wobei zwischen den Ringen Wälzkörper 4, 4' - vorliegend Kegelrollen - angeordnet sind. Die Wälzkörper 4, 4' werden von einem Käfig gehalten.

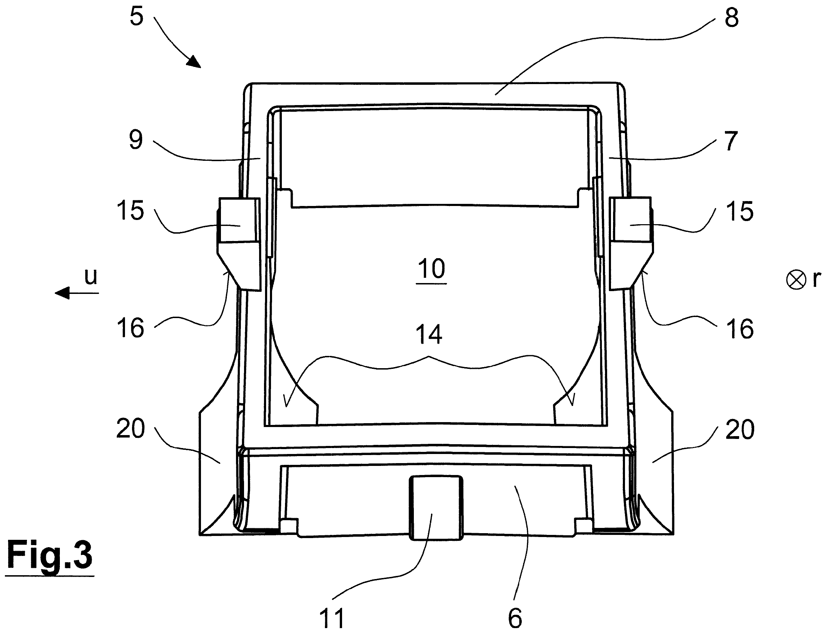

Der Käfig ist nicht einstückig ausgebildet, sondern er wird durch eine Anzahl von Käfigsegmenten 5 gebildet. Ein solches Käfigsegment 5 ist in Fig. 3 - gesehen in radiale Richtung r - dargestellt. Hiernach besteht jedes Käfigsegment 5 aus einer rahmenförmigen Struktur, die durch vier Begrenzungswände 6, 7, 8 und 9 gebildet wird. Die vier Wände bilden eine im Wesentlichen rechteckige (genau genommen: konisch geformte) Aufnahmetasche 10, in der ein Wälzkörper 4 platziert ist.

Wie sich aus der Zusammenschau der Figuren 1 und 3 ergibt, sind dabei Anlaufflächen 14 so an den Seiten der Begrenzungswände 7 und 9, die der Aufnahmetasche 10 zugewandt sind, angeformt, dass sich für einen Wälzkörper 4 im montierten Zustand in radiale Richtung r ein Hinterschnitt ergibt, d. h. der Wälzkörper 4 wird nach Art einer SchnappVerbindung in der Aufnahmetasche 10 des Käfigsegments gehalten. Zu diesbezüglichen Details wird ausdrücklich auf die WO 2012/076583 A2 der Anmelderin Bezug genommen.

Wie weiter aus Fig. 1 gesehen werden kann, ist nur jeder zweite Wälzkörper 4 von einem Käfigsegment 5 gehalten. Zwischen zwei solchen Wälzkörpern 4 mit Käfigsegment 5 ist jeweils ein Wälzkörper 4' angeordnet, der nicht von einem Käfigsegment 5 eingefasst wird. Allerdings erstrecken sich in Umfangsrichtung U seitlich vom Käfigsegment 5 Halteabschnitte 15 weg, so dass - wie es am besten aus Fig. 1 gesehen werden kann - die benachbarten Wälzkörper 4' durch Anlaufflächen 16 in Position gehalten werden, die am Halteabschnitt 15 ausgebildet werden. Demgemäß ist sichergestellt, dass auch die Wälzkörper 4', die nicht in einer Aufnahmetasche 10 des Käfigsegments 5 angeordnet sind, gehindert werden, radial nach außen zu fallen, da sie von den Anlaufflächen 16 zurückgehalten werden.

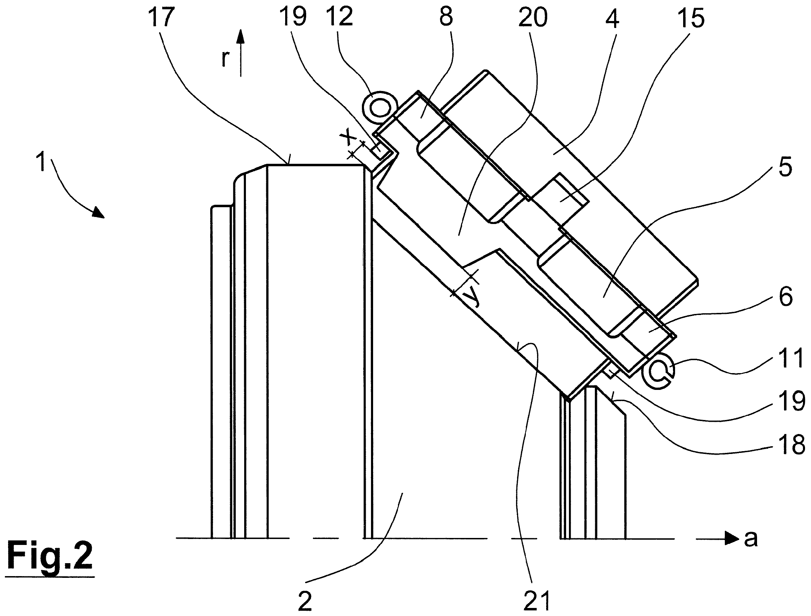

Damit die Wälzkörper 4', 4' in der Käfiganordnung, bestehend aus den einzelnen Käfigsegmenten 5, auch bei demontiertem Außenring 3 zusammen mit dem Innenring 2 einen unverlierbaren Verbund bilden, ist an den Begrenzungswänden 6 und 8 - wie es am besten aus Fig. 2 in der Zusammenschau mit Fig. 1 hervorgeht - Befestigungselemente 11 und 12 angeformt, die im Ausführungsbeispiel als ösenförmige Anformungen an den Begrenzungswänden 6, 7 ausgebildet sind. Durch die ösenförmigen Befestigungselemente 11, 12 ist ein Kopplungselement 13 in Form eines Seils eingezogen (dargestellt mit gestrichelten Linien in Fig. 1). Nach Spannen des Seils liegt ein Verbund der einzelnen Käfigsegmente 5 vor, so dass der unverlierbare Verbund von Käfigelementen 5 samt Wälzkörpern 4, 4' und Innenring 2 hergestellt ist, auch wenn der Außenring 3 entfernt ist.

In Fig. 2 ist das oben dargestellte Befestigungselement 12 zur Illustration als vollständige Öse ausgebildet. Das unten dargestellte Befestigungselement 11 ist als unterbrochene Öse dargestellt, d. h. hier ist das Befestigungselement nach Art zweier zusammenwirkender Hakenabschnitte ausgeführt, die das Seil 13 greifen. Somit kann hier das Seil 13 vorteilhaft von der Seite eingehakt werden.

Nicht zwingend, aber bevorzugt sind indes alle ösenförmigen Befestigungselemente 11, 12 als geschlossene Ösen - also ringförmig - ausgebildet. In Fig. 2 ist, wie erläutert, zu sehen, dass nur die radial außen liegenden Befestigungselemente 12 als geschlossene Ösen ausgebildet sind. Die radial innen liegenden Befestigungselemente 11 sind hier geschlitzt ausgebildet, d. h. sie sind nicht geschlossen ausgebildet.

Die einzelnen Käfigsegmente 5' sind rollengeführt. Im Falle einer Verkippung eines Käfigsegments 5 kann dieses an seiner einen Stirnseite auf der Schulter 17 des Innenrings 2 und an seiner anderen Stirnseite an einer Anlauffläche 18 geführt werden (s. hierzu Fig. 2). Hierzu sind am Käfigsegment Abstützelemente 19 angeformt.

Dabei soll verhindert werden, dass ein Anlauf auf der Laufbahn 21 des Innenrings 2 erfolgt. Um dies zu erreichen, muss ein Abstand x zwischen dem Abstützelement 19 an der Stirnseite des Käfigsegments 5 und der Schulter 17 kleiner sein als der Abstand y zwischen einem Stegfortsatz 20 und der Innenring-Laufbahn 21.

In Fig. 1 ist noch folgendes zu erkennen: Exemplarisch ist für nur eine einzige Umfangsstelle des Käfigs skizziert, dass Abstandselemente 22 vorgesehen werden können. Diese Abstandselemente 22 sind im Ausführungsbeispiel nach Art eines O-Ring ausgebildet, auf da Seil 13 aufgeschoben und bewirken, dass eine relative Verschieblichkeit in Umfangsrichtung U zwischen dem Seil 13 und dem Befestigungselement 11, 12 verhindert wird. Genauso kann das Abstandselement beispielsweise als Hülse ausgeführt werden, die auf das Seil 13 aufgeschoben wird; die Längserstreckung besagter Hülse ist dabei so gewählt, dass die Befestigungselemente 11, 12 zweier benachbarter Käfigsegmente 5 auf einem definierten Abstand gehalten werden. Die Käfigsegmente können sich demgemäß nicht in Umfangsrichtung "zusammenschieben".

### Bezugszeichenliste

- 1: Wälzlager
- 2: Innenring
- 3: Außenring
- 4: Wälzkörper
- 4': Wälzkörper
- 5: Käfigsegment
- 6: Begrenzungswand
- 7: Begrenzungswand
- 8: Begrenzungswand
- 9: Begrenzungswand
- 10: Aufnahmetasche
- 11: Befestigungselement
- 12: Befestigungselement
- 13: Kopplungselement (Seil)
- 14: Anlauffläche
- 15: Halteabschnitt
- 16: Anlauffläche
- 17: Schulter
- 18: Anlauffläche
- 19: Abstützelement
- 20: Stegfortsatz
- 21: Innenring-Laufbahn
- 22: Abstandselement

- U: Umfangsrichtung
- a: axiale Richtung
- r: radiale Richtung

- x: Abstand
- y: Abstand

## Patentansprüche

1. Wälzlager (1) mit mindestens einem Innenring (2) und mindestens einem Außenring (3), wobei zwischen den Lagerringen (2, 3) eine Anzahl Wälzkörper (4) angeordnet sind, wobei die Wälzkörper (4) durch einen Käfig gehalten werden, wobei der Käfig aus einer Anzahl Käfigsegmenten (5) besteht, wobei jedes Käfigsegment (5) aus einer rahmenförmigen Struktur besteht, bei der mehrere seitliche Begrenzungswände (6, 7, 8, 9) eine Aufnahmetasche (10) für einen Wälzkörper (4) bilden, wobei an jedem Käfigsegment (5) mindestens ein Befestigungselement (11, 12) angeordnet ist, wobei die Käfigsegmente (5) über ein Kopplungselement (13) zumindest zeitweise verbindbar sind, wozu das Kopplungselement (13) mit den Befestigungselementen (11, 12) in Eingriff gebracht wird, und wobei die Befestigungselemente (11, 12) zumindest teilweise, vorzugsweise vollständig, als geschlossene Ösen ausgebildet sind, durch die das Kopplungselement (13) durchgefädelt werden kann,
**dadurch gekennzeichnet, dass**
ein Käfigsegment (5) mit seiner Aufnahmetasche (10) einen Wälzkörper (4) aufnimmt und die sich an diesen Wälzkörper (4) in Umfangsrichtung (U) anschließenden Wälzkörper (4') von einem Käfigsegment (5) freigehalten sind, wobei am Käfigsegment (5) in Umfangsrichtung (U) herausragende Halteabschnitte (15) angeordnet sind, die für die sich an den vom Käfigsegment (5) gehaltenen Wälzkörper (4) in Umfangsrichtung (U) anschließenden Wälzkörper (4') eine Anlauffläche (16) bilden, die die Wälzkörper (4') in ihrer radialen Beweglichkeit begrenzen.

2. Wälzlager nach Anspruch 1, **dadurch gekennzeichnet, dass** das Kopplungselement (13) ein Zugkräfte übertragendes, aber weitgehend biegeschlaffes Bauteil ist.

3. Wälzlager nach Anspruch 2, **dadurch gekennzeichnet, dass** das Kopplungselement (13) ein Seil ist.

4. Wälzlager nach einem der Ansprüche 1 bis 3, **dadurch gekennzeichnet, dass** die Befestigungselemente (11, 12) einstückig am Käfigsegment (5) angeformt sind.

5. Wälzlager nach einem der Ansprüche 1 bis 4, **dadurch gekennzeichnet, dass** die seitlichen Begrenzungswände (6, 7, 8, 9) einen geschlossenen im wesentlichen rechteckförmigen Rahmen bilden, wobei zwei Begrenzungswände (6, 8) in Umfangsrichtung (U) des Wälzlagers verlaufen, wobei zwei Begrenzungswände (7, 9) die in Umfangsrichtung (U) verlaufenen Begrenzungswände (6, 8) verbinden und wobei an den beiden in Umfangsrichtung (U) verlaufenen Begrenzungswänden (6, 8) je ein Befestigungselement (11, 12) angeordnet ist.

6. Wälzlager nach Anspruch 5, **dadurch gekennzeichnet, dass** die die in Umfangsrichtung (U) verlaufenden Begrenzungswände (6, 8) verbindenden Begrenzungswände (7, 9) mit konkaven Anlaufflächen (14) versehen sind, die den sich in der Aufnahmetasche (10) befindlichen Wälzkörper (4) in seiner radialen Beweglichkeit begrenzen.

7. Wälzlager nach einem der Ansprüche 1 bis 6, **dadurch gekennzeichnet, dass** die Käfigsegmente (5) aus einem Material bestehen, dessen Wärmeausdehnungskoeffizient einen Wert aufweist, der in einem Toleranzband von +/- 15 %, verglichen mit dem Wärmeausdehnungskoeffizienten von Stahl liegt, wobei die Käfigsegmente (5) insbesondere aus Gusseisen bestehen.

8. Wälzlager nach einem der Ansprüche 1 bis 7, **dadurch gekennzeichnet, dass** an oder auf dem Kopplungselement (13) mindestens ein Abstandselement (22) angeordnet ist.

9. Wälzlager nach einem der Ansprüche 1 bis 8, **dadurch gekennzeichnet, dass** an dem Käfigsegment (5) mindestens ein Abstützelement (19) angeordnet, insbesondere angeformt, ist.

## Claims

1. Anti-friction bearing (1) having at least one inner ring (2) and at least one outer ring (3), a number of rolling bodies (4) being arranged between the bearing rings (2, 3), the rolling bodies (4) being held by way of a cage, the cage consisting of a number of cage segments (5), each cage segment (5) consisting of a frame-shaped structure, in the case of which a plurality of lateral partition walls (6, 7, 8, 9) form a receiving pocket (10) for a rolling body (4), at least one fastening element (11, 12) being arranged on each cage segment (5), it being possible for the cage segments (5) to be connected at least temporarily via a coupling element (13), to which end the coupling element (13) is brought into engagement with the fastening elements (11, 12), and the fastening elements (11, 12) being configured at least partially, preferably completely, as closed eyelets, through which the coupling element (13) can be threaded, **characterized in that** a cage segment (5) receives a rolling body (4) by way of its receiving pocket (10), and the rolling bodies (4') which adjoin the said rolling body (4) in the circumferential direction (U) are kept clear by a cage segment (5), holding sections (15) which protrude in the circumferential direction (U) being arranged on the cage segment (5), which holding sections (15) form a run-on face (16) for the rolling bodies (4') which adjoin, in the circumferential direction (U), the rolling body (4) which is held by the cage segment (5), which run-on faces (16) limit the radial movability of the rolling bodies (4').

2. Anti-friction bearing according to Claim 1, **characterized in that** the coupling element (13) is a component which transmits tensile forces but is largely flexurally slack.

3. Anti-friction bearing according to Claim 2, **characterized in that** the coupling element (13) is a cable.

4. Anti-friction bearing according to one of Claims 1 to 3, **characterized in that** the fastening elements (11, 12) are formed in one piece on the cage segment (5).

5. Anti-friction bearing according to one of Claims 1 to 4, **characterized in that** the lateral partition walls (6, 7, 8, 9) form a closed, substantially rectangular frame, two partition walls (6, 8) running in the circumferential direction (U) of the anti-friction bearing, two partition walls (7, 9) connecting the partition walls (6, 8) which run in the circumferential direction (U), and in each case one fastening element (11, 12) being arranged on the two partition walls (6, 8) which run in the circumferential direction (U).

6. Anti-friction bearing according to Claim 5, **characterized in that** the partition walls (7, 9) which connect the partition walls (6, 8) which run in the circumferential direction (U) are provided with concave run-on faces (14) which limit the radial movability of the rolling body (4) which is situated in the receiving pocket (10).

7. Anti-friction bearing according to one of Claims 1 to 6, **characterized in that** the cage segments (5) consist of a material, the coefficient of thermal expansion of which has a value which lies in a tolerance range of ±15%, in comparison with the coefficient of thermal expansion of steel, the cage segments (5) consisting, in particular, of cast iron.

8. Anti-friction bearing according to one of Claims 1 to 7, **characterized in that** at least one spacer element (22) is arranged at or on the coupling element (13).

9. Anti-friction bearing according to one of Claims 1 to 8, **characterized in that** at least one supporting element (19) is arranged, in particular formed, on the cage segment (5).

## Revendications

1. Palier à roulement (1) comprenant au moins une bague intérieure (2) et au moins une bague extérieure (3), un certain nombre de corps de roulement (4) étant disposés entre les bagues de palier (2, 3), les corps de roulement (4) étant retenus par une cage, la cage étant constituée d'un certain nombre de segments de cage (5), chaque segment de cage (5) étant constitué d'une structure en forme de cadre dans laquelle plusieurs parois de limitation latérales (6, 7, 8, 9) forment une cavité de réception (10) pour un corps de roulement (4), au moins un élément de fixation (11, 12) étant disposé sur chaque segment de cage (5), les segments de cage (5) pouvant être reliés les uns aux autres au moins temporairement par le biais d'un élément d'accouplement (13), l'élément d'accouplement (13) étant, à cette fin, amené en prise avec les éléments de fixation (11, 12), et les éléments de fixation (11, 12) étant réalisés au moins partiellement, de préférence complètement, sous forme d'oeillets fermés à travers lesquels l'élément d'accouplement (13) peut être enfilé,
**caractérisé en ce**
**qu'**un segment de cage (5) reçoit, à l'aide de sa cavité de réception (10), un corps de roulement (4) et les corps de roulement (4') adjacents à ce corps de roulement (4) dans la direction périphérique (U) sont laissés libres par un segment de cage (5), des parties de retenue (15) faisant saillie dans la direction périphérique (U) étant disposées sur le segment de cage (5), lesquelles parties de retenue forment une surface de butée (16) pour les corps de roulement (4') adjacents, dans la direction périphérique (U), au corps de roulement (4) retenu par le segment de cage (5), lesquelles surfaces de butée limitent la mobilité radiale des corps de roulement (4').

2. Palier à roulement selon la revendication 1, **caractérisé en ce que** l'élément d'accouplement (13) est un composant transmettant les forces de traction mais dépourvu, dans une large mesure, de résistance à la flexion.

3. Palier à roulement selon la revendication 2, **caractérisé en ce que** l'élément d'accouplement (13) est un câble.

4. Palier à roulement selon l'une quelconque des revendications 1 à 3, **caractérisé en ce que** les éléments de fixation (11, 12) sont formés d'une seule pièce sur le segment de cage (5).

5. Palier à roulement selon l'une quelconque des revendications 1 à 4, **caractérisé en ce que** les parois de limitation latérales (6, 7, 8, 9) forment un cadre fermé sensiblement rectangulaire, deux parois de limitation (6, 8) s'étendant dans la direction périphérique (U) du palier à roulement, deux parois de limitation (7, 9) reliant les parois de limitation (6, 8) s'étendant dans la direction périphérique (U), et un élément de fixation (11, 12) respectif étant disposé sur les deux parois de limitation (6, 8) s'étendant dans la direction périphérique (U).

6. Palier à roulement selon la revendication 5, **caractérisé en ce que** les parois de limitation (7, 9) reliant les parois de limitation (6, 8) s'étendant dans la direction périphérique (U) sont dotées de surfaces de butée (14) concaves qui limitent la mobilité radiale du corps de roulement (4) se trouvant dans la cavité de réception (10).

7. Palier à roulement selon l'une quelconque des revendications 1 à 6, **caractérisé en ce que** les segments de cage (5) sont constitués d'un matériau dont le coefficient de dilatation thermique présente une valeur qui est comprise dans une bande de tolérances de +/- 15 %, par comparaison avec le coefficient de dilatation thermique de l'acier, les segments de cage (5) étant en particulier constitués de fonte.

8. Palier à roulement selon l'une quelconque des revendications 1 à 7, **caractérisé en ce qu'**au moins un élément d'espacement (22) est disposé contre ou sur l'élément d'accouplement (13).

9. Palier à roulement selon l'une quelconque des revendications 1 à 8, **caractérisé en ce qu'**au moins un élément d'appui (19) est disposé, en particulier formé, sur le segment de cage (5).
